(19) **Europäisches Patentamt**
**European Patent Office**
**Office européen des brevets**

(11) **EP 1 912 324 B1**

(12) **FASCICULE DE BREVET EUROPEEN**

(45) Date de publication et mention
de la délivrance du brevet:
**24.03.2010 Bulletin 2010/12**

(51) Int Cl.:
***H02P 1/02*** *(2006.01)*

(21) Numéro de dépôt: **07116621.9**

(22) Date de dépôt: **18.09.2007**

(54) **Procédé et système de détection d'erreurs de câblage entre un démarreur et un moteur électrique**

Verfahren und Vorrichtung zur Erkennung von Verkabelungssfehlern zwischen einem Anlasser und einem elektrischen Motor

Method and system for detecting the cabling errors between a starter and an electric motor

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.10.2006 FR 0654229**

(43) Date de publication de la demande:
**16.04.2008 Bulletin 2008/16**

(73) Titulaire: **Schneider Toshiba Inverter Europe SAS 27120 Pacy sur Eure (FR)**

(72) Inventeurs:
• **Malrait, François**
**27120 Jouy sur Eure (FR)**
• **Delafontaine, Quentin**
**92500 Rueil-Malmaison (FR)**

(74) Mandataire: **Bié, Nicolas et al**
**Schneider Electric Industries SAS**
**Service Propriété Industrielle**
**35 rue Joseph Monier - CS 30323**
**92506 Rueil-Malmaison Cedex (FR)**

(56) Documents cités:
WO-A-2004/114492 US-A- 6 038 114
US-B1- 6 304 053 US-B1- 6 426 603

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à un procédé et un système de commande d'un moteur électrique asynchrone. Le procédé et le système de commande selon l'invention permettent plus particulièrement de détecter les erreurs de câblage entre le moteur électrique et son démarreur.

Un moteur électrique asynchrone peut être commandé par un démarreur de plusieurs façons. Le câblage entre le moteur et le démarreur peut notamment être réalisé en étoile ou en triangle. Il existe la configuration triangle-ligne et la configuration triangle-enroulements. Dans la configuration triangle-enroulements, les groupements de thyristors du démarreur sont branchés en série directement dans les trois branches de la configuration triangle des enroulements du moteur.

Dans la configuration triangle-enroulements, les câbles à brancher sont au nombre de six. Trois câbles permettent de connecter les sorties du démarreur aux entrées du moteur et trois câbles permettent de boucler les sorties du moteur sur les trois phases du réseau électrique d'alimentation.

Cette configuration est simple à réaliser, cependant lorsque le moteur et le démarreur ne sont pas à proximité l'un de l'autre, des erreurs de câblage sont fréquentes. L'une des erreurs consiste par exemple à inverser deux phases. Une autre erreur consiste par exemple à mettre un ou plusieurs enroulements du moteur en court-circuit.

Les brevets US 6,038,114, US 6,426,603 et US 6,304,053 décrivent des méthodes de détection des erreurs de câblage entre un démarreur et un moteur. La détection est réalisée à partir des tensions mesurées aux bornes des interrupteurs de commande du démarreur.

Le but de l'invention est de proposer un procédé de commande d'un moteur électrique permettant de diagnostiquer les erreurs de câblage éventuelles entre le moteur et son démarreur.

Ce but est atteint par un procédé de commande d'un moteur électrique asynchrone comportant trois enroulements répartis sur trois branches configurées en triangle, le moteur étant commandé par un démarreur comportant des semi-conducteurs de puissance branchés en série directement dans les trois branches de la configuration en triangle des enroulements du moteur, ledit procédé étant caractérisé en ce qu'il comprend les étapes suivantes :

- application d'une tension dans une première branche du triangle,

- après un retard à l'amorçage, amorçage du semi-conducteur de la première branche,

- mesure du courant électrique généré dans la première branche lors de l'amorçage,

- détermination de la configuration du câblage de la première branche en fonction du courant électrique mesuré.

Selon une première variante de réalisation, l'amorçage du semi-conducteur de la première branche est un premier amorçage réalisé après un premier retard à l'amorçage, le procédé de commande selon l'invention comprenant également :

- un second amorçage du semi-conducteur de la première branche réalisé après un second retard à l'amorçage distinct du premier retard à l'amorçage,

- une mesure du courant électrique généré lors du second amorçage,

- la détermination de la configuration du câblage de la première branche étant réalisée par comparaison entre une valeur maximale du courant électrique mesuré lors du premier amorçage et une valeur maximale du courant électrique mesuré lors du second amorçage.

Selon une seconde variante de réalisation, la détermination de la configuration du câblage de la première branche est réalisée par comparaison entre le courant nominal du moteur et une valeur maximale du courant électrique mesuré lors de l'amorçage après un retard à l'amorçage d'une valeur déterminée.

Dans cette seconde variante, la valeur du retard à l'amorçage correspond par exemple à celle pour laquelle le courant maximal mesuré dans la première branche lors de l'amorçage est théoriquement égal au courant nominal du moteur lorsque la première branche est correctement câblée.

Selon une troisième variante de réalisation, l'amorçage du semi-conducteur de la première branche est un premier amorçage réalisé après un retard à l'amorçage initial, et le procédé comprend en plus :

- plusieurs amorçages successifs du semi-conducteur de la première branche en faisant varier à chaque fois le retard à l'amorçage jusqu'à obtenir un retard à l'amorçage final pour lequel le courant électrique maximal mesuré est sensiblement égal au courant nominal,

- la détermination de la configuration du câblage de la première branche étant réalisée par comparaison entre le retard à l'amorçage initial et le retard à l'amorçage final.

Dans cette troisième variante de réalisation, la valeur du retard à l'amorçage initial correspond à celle pour laquelle le courant maximal mesuré dans la première branche lors de l'amorçage est théoriquement égal au courant nominal du moteur lorsque la première branche est correctement câblée.

Le procédé de commande selon l'invention est par exemple mis en oeuvre successivement sur chacune des trois branches de la configuration en triangle des enroulements du moteur.

Le but défini ci-dessus est également atteint par un système de commande d'un moteur électrique asynchrone comportant trois enroulements répartis sur trois branches configurées en triangle, le moteur étant commandé par un démarreur comportant des semi-conducteurs de puissance branchés en série directement dans les trois branches de la configuration en triangle des enroulements du moteur, ledit système comprenant :

- des moyens pour appliquer une tension dans une première branche du triangle,

- des moyens de commande pour effectuer un amorçage du semi-conducteur de la première branche après un retard à l'amorçage,

- des moyens pour mesurer un courant électrique généré dans la première branche lors de l'amorçage,

- des moyens de traitement pour déterminer la configuration du câblage de la première branche en fonction du courant électrique mesuré.

Selon une première variante de réalisation, l'amorçage du semi-conducteur de la première branche est un premier amorçage réalisé après un premier retard à l'amorçage, le système comprenant en plus :

- des moyens de commande pour effectuer un second amorçage du semi-conducteur de la première branche réalisé après un second retard à l'amorçage distinct du premier retard à l'amorçage,

- des moyens pour mesurer un courant électrique généré lors du second amorçage,

- les moyens de traitement effectuant une comparaison entre une valeur maximale du courant électrique mesuré lors du premier amorçage et une valeur maximale du courant électrique mesuré lors du second amorçage en vue de déterminer la configuration du câblage de la première branche.

Selon une seconde variante de réalisation, les moyens de traitement effectuent une comparaison entre le courant nominal du moteur et une valeur maximale du courant électrique mesuré lors de l'amorçage après un retard à l'amorçage d'une valeur déterminée pour déterminer la configuration du câblage de la première branche.

Dans cette seconde variante de réalisation, la valeur du retard à l'amorçage correspond à celle pour laquelle le courant maximal mesuré dans la première branche lors de l'amorçage est théoriquement égal au courant nominal du moteur lorsque la première branche est correctement câblée.

Selon une troisième variante de réalisation, l'amorçage du semi-conducteur de la première branche est un premier amorçage réalisé après un retard à l'amorçage initial, et le système comprend en plus :

- des moyens de commande pour effectuer plusieurs amorçages successifs du semi-conducteur de la première branche en faisant varier à chaque fois le retard à l'amorçage jusqu'à ce qu'à obtenir un retard à l'amorçage final pour lequel le courant électrique maximal mesuré est sensiblement égal au courant nominal,

- les moyens de traitement effectuant une comparaison entre le retard à l'amorçage initial et le retard à l'amorçage final pour déterminer la configuration du câblage de la première branche.

Dans cette troisième variante de réalisation, la valeur du retard à l'amorçage initial correspond à celle pour laquelle le courant maximal mesuré dans la première branche lors de l'amorçage est théoriquement égal au courant nominal du moteur lorsque la première branche est correctement câblée.

D'autres caractéristiques et avantages vont apparaître dans la description détaillée qui suit en se référant à un mode de réalisation donné à titre d'exemple et représenté par les dessins annexés sur lesquels :

- La figure 1 représente schématiquement le moteur et le démarreur correctement câblés pour obtenir une configuration triangle dans laquelle les thyristors du démarreur sont branchés en série directement dans les trois branches des enroulements du moteur.

- La figure 2 représente la configuration en triangle résultant du câblage montré en figure 1.

- La figure 3 représente schématiquement le moteur et le démarreur connectés par un mauvais câblage.

- La figure 4A représente la configuration en triangle résultant du mauvais câblage représenté en figure 3.

- Les figures 4B à 4E représentent différentes configurations dans lesquelles le câblage entre le moteur et le démarreur est mauvais.

- La figure 5 représente un premier algorithme mis en oeuvre dans le procédé de commande de l'invention pour détecter les erreurs de câblage entre le moteur et le démarreur.

- La figure 6 représente un deuxième algorithme mis en oeuvre dans le procédé de commande de l'invention pour détecter les erreurs de câblage entre le moteur et le démarreur.

- La figure 7 représente un troisième algorithme mis en oeuvre dans le procédé de commande de l'invention pour détecter les erreurs de câblage entre le moteur et le démarreur.

- La figure 8 représente un diagramme sur lequel sont reportées les courbes de tension V12 et V13 ainsi que le courant résultant généré pour un retard à l'amorçage x donné.

- La figure 9 représente les courbes Imax = f(x). La courbe en trait plein est celle obtenue lorsque le câblage d'une branche est correct. La courbe en pointillés représente celle obtenue lorsque le câblage de la branche est mauvais. Le diagramme fait également apparaître la courbe Imax=Inom en trait plus épais.

De manière connue, un moteur électrique M asynchrone comporte trois enroulements U, V, W répartis sur trois branches par exemple configurées en triangle. La commande d'un moteur asynchrone M est par exemple réalisée par un démarreur D connecté au moteur M. Un démarreur D comporte pour sa part des bras T1, T2, T3 de semi-conducteurs de puissance constitués sur chaque phase d'au moins deux thyristors montés tête bêche. Sur les figures annexées, les thyristors sont représentés par des interrupteurs.

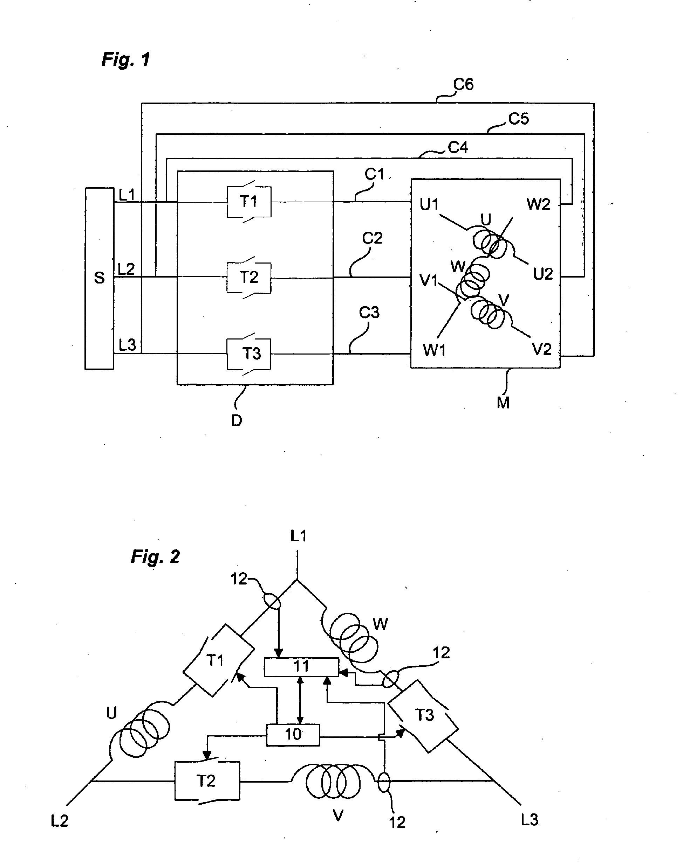

La connexion entre le moteur M et le démarreur D peut être réalisée de plusieurs façons. L'une des façons consiste à placer les bras de thyristors T1, T2, T3 du démarreur D dans les enroulements U, V, W du moteur M (figure 1). Selon ce câblage, chaque bras de thyristors T1, T2, T3 du démarreur D est connecté en série d'un enroulement distinct du moteur M.

Pour réaliser ce câblage entre le moteur M et le démarreur D, six câbles C1, C2, C3, C4, C5, C6 sont branchés entre le moteur M et le démarreur D. En référence à la figure 2, à l'aide des trois câbles C1, C2, C3, les sorties du démarreur D sont connectées aux entrées U1, V1 et W1 du moteur M et à l'aide des trois autres câbles C4, C5, C6, les sorties W2, U2 et V2 du moteur M sont bouclés respectivement sur les trois phases L1, L2 et L3 du réseau S électrique d'alimentation.

Les phases du réseau électrique d'alimentation sont reliées à l'entrée du démarreur. Elles sont notées par convention L1, L2, L3 dans l'ordre de câblage sur les bras de thyristors T1, T2, T3. le bras de thyristors T1 est donc branché sur la phase L1, le bras de thyristors T2 est relié à la phase L2 et le bras de thyristors T3 est relié à la phase L3. Il est évident que les phases réelles du réseau d'alimentation correspondent aux phases L1, L2, L3 à une permutation des indices près.

Dans le moteur M, un premier enroulement U est situé entre les bornes U1 et U2, un second enroulement V entre les bornes V1 et V2 et un troisième enroulement W entre les bornes W 1 et W2.

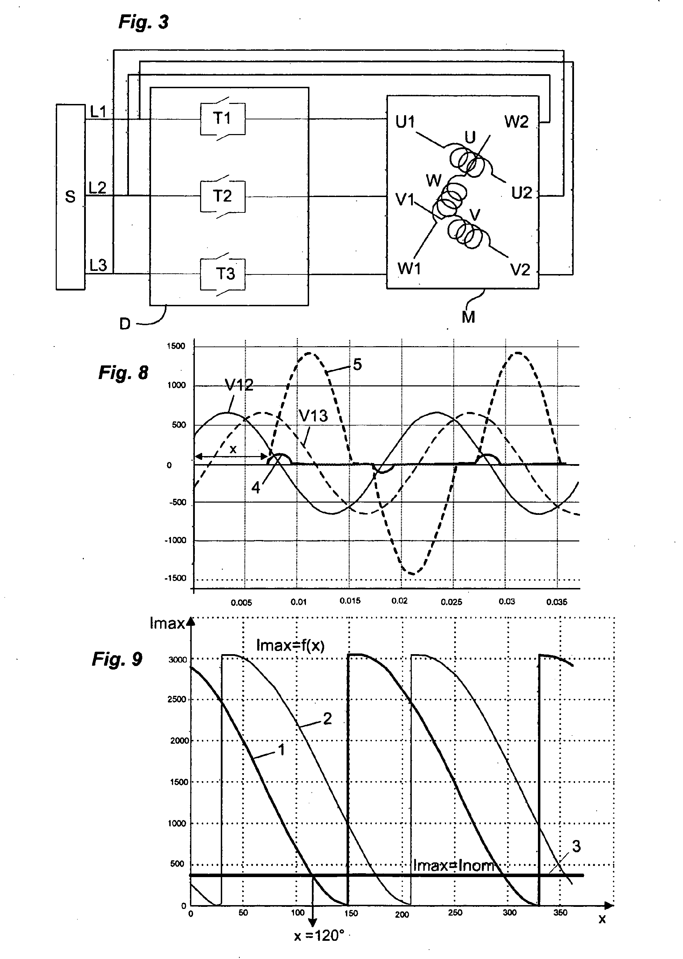

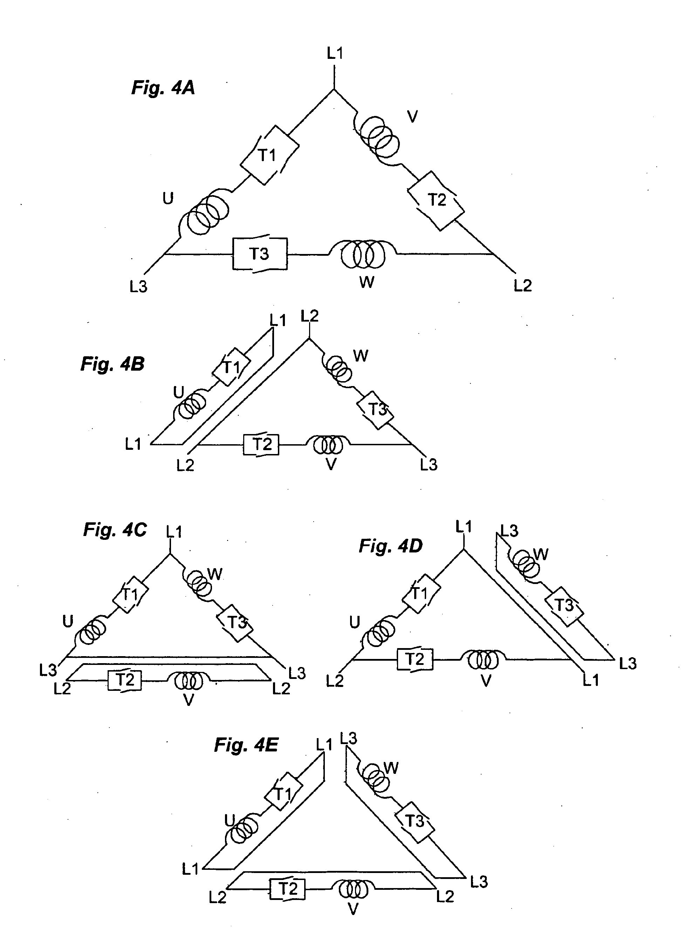

L'une des erreurs de câblage consiste par exemple à inverser deux phases. On obtient alors la configuration dite "mauvais triangle" représentée en figures 3 et 4A dans laquelle les phases L2 et L3 sont inversées. Plus précisément, dans cette configuration "mauvais triangle", la sortie W2 du moteur M est bouclée sur la phase L2 du réseau, la sortie U2 du moteur est connectée sur la phase L3 et la sortie V2 du moteur est connectée sur la phase L1 du réseau. L'inversion des phases L2 et L3 a inévitablement une incidence sur l'amorçage du bras de thyristors T1. En effet, de manière connue, le bras de thyristors T1 est amorcé après un retard à l'amorçage x déterminé à partir du passage à zéro de la tension composée V12 appliquée sur la branche de la configuration en triangle située entre les phases L1 et L2. Or si à cause d'une erreur de câblage, la tension appliquée n'est pas V12 mais en fait V13, c'est-à-dire la tension appliquée entre les phases L1 et L3, l'appel de courant obtenu à l'amorçage du bras de thyristors T1 ne sera pas celui attendu.

La figure 8 permet d'expliquer ce principe. Si le câblage est correct, après le retard à l'amorçage x, la tension V12 est faible ce qui engendre un faible appel de courant dans le bras de thyristors T1 (courbe 4, figure 8). En revanche si le câblage est mauvais, la tension aux bornes du bras de thyristors n'est pas V12 mais en fait V13 et après le retard à l'amorçage x, cette tension V13 est proche de son maximum créant un fort appel de courant (courbe 5, figure 8) à travers le bras de thyristors T1 pouvant engendrer des dysfonctionnements dans le démarreur D et provoquer des détériorations dans le moteur M.

Les figures 4B à 4E montrent d'autres erreurs de câblage possibles entre le moteur M et le démarreur D. En figure 4B, l'enroulement U est en court-circuit. En figure 4C, l'enroulement V est en court circuit. En figure 4D, l'enroulement W est en court-circuit. En figure 4E, tous les enroulements U, V, W du moteur M sont en court-circuit.

Le procédé et le système de commande selon l'invention permettent de détecter les erreurs de câblage lors d'une phase de diagnostic. Cette phase de diagnostic peut être initiée par exemple automatiquement avant chaque démarrage du moteur M ou uniquement avant un premier démarrage du moteur M. Elle peut également être initiée volontairement par l'utilisateur par exemple après le câblage du démarreur D sur le moteur M.

Le système de commande comporte des moyens de traitement 11 couplés à des moyens de commande 10 des bras de thyristors T1, T2, T3, à des moyens de mémorisation et à des moyens de mesure de courant 12 traversant chaque branche de la configuration triangle (figure 2).

Le diagnostic est par exemple réalisé branche après branche.

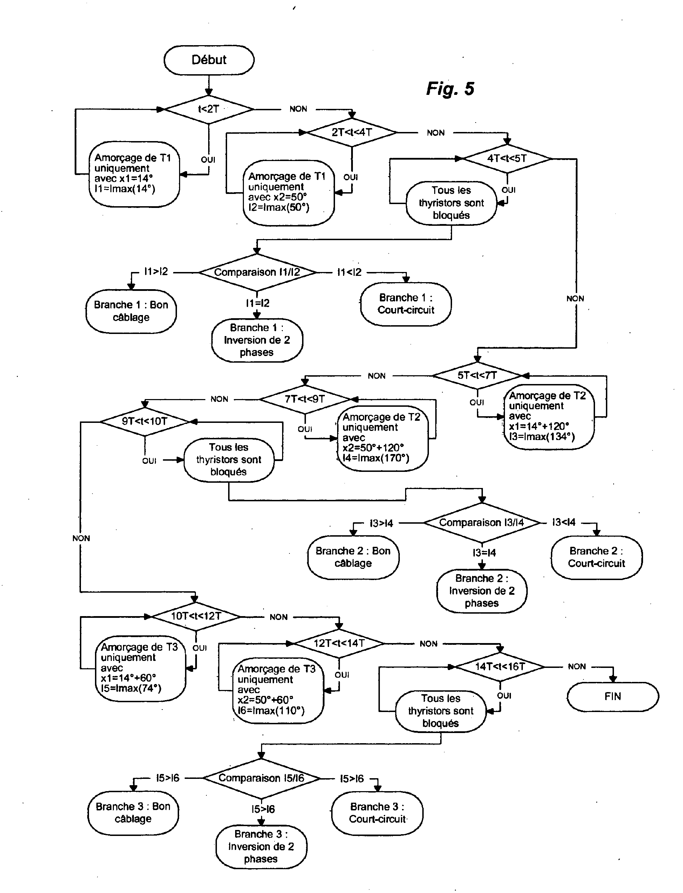

Une première solution pour détecter les erreurs de câblage consiste grâce aux moyens de traitement 11 du système de commande à dérouler l'algorithme représenté en figure 5. Cet algorithme comprend les étapes suivantes :

- Pendant une certaine durée, par exemple inférieure à deux périodes (2T), le bras de thyristors T1 de la première branche est commandé à l'amorçage par les moyens de commande 10, après un retard à l'amorçage déterminé x1 par exemple égal à 14°.

- Puis pendant une seconde durée par exemple comprise entre 2T et 4T, le même bras de thyristors T1 est commandé à l'amorçage par les moyens de commande 10, après un retard à l'amorçage x2 déterminé, distinct de x1 et par exemple égal à 50°.

- Avant d'effectuer un diagnostic sur le câblage de cette première branche du triangle, les bras des thyristors T1, T2 et T3 sont ensuite commandés en blocage.

- A l'aide d'un capteur de courant, le courant traversant le bras de thyristors T1 est mesuré lors de chacun des deux amorçages.

- les maxima de courant I1 et I2 ayant traversé le bras de thyristors T1 à chaque amorçage sont ensuite déterminés grâce à un détecteur de courant et sont mémorisés dans les moyens de mémorisation.

- Grâce aux moyens de traitement 11, les deux maxima I1, I2 de courant obtenus sont comparés afin de déterminer si le câblage de la première branche du triangle est correct ou erroné. La détermination de la configuration du câblage est réalisée par les moyens de traitement 11 selon les principes suivants :

- si I1>I2, cela signifie que le câblage de la première branche est correct,

- si I1<I2, cela signifie que deux phases sont inversées sur la première branche,

- si I1=I2 et I1 et I2 proches de 0, cela signifie que la première branche est en court-circuit.

Ces résultats se déduisent à partir des courbes Imax=f(x) tracées pour la configuration "mauvais triangle" et pour la configuration recommandée (figure 9). En effet, au voisinage de certaines valeurs du retard à l'amorçage x, on remarque par exemple que pour la configuration recommandée (courbe 1) Imax(14°)>Imax(50°) tandis que pour la mauvaise configuration (courbe 2) Imax(14')<Imax(50'). Bien entendu, les valeurs de x1 et x2 doivent être choisies pour que la différence entre les courants maximaux I1 et I2 mesurés soit suffisamment visible et suffisante pour diagnostiquer la configuration du câblage. Il est évident que d'autres valeurs que 14° et 50° conviennent parfaitement pour la mise en oeuvre de la méthode de détection décrite ci-dessus.

Le processus décrit pour la première branche est ensuite reproduit pour les deuxième et troisième branches contenant respectivement les bras de thyristors T2 et T3, par exemple dans la continuité de la détermination du câblage de la première branche. Les phases du réseau étant déphasées de 60° et 120°, les retards à l'amorçage x1 et x2 sont décalés de 120° pour la deuxième branche contenant le bras de thyristor T2 et décalés de 60° pour la troisième branche contenant le bras de thyristor T3. Les courants maximaux récupérés sont I3 et I4 pour la deuxième branche et I5 et I6 pour la troisième branche.

Bien entendu, si le câblage est correct pour deux branches, il peut également être correct pour la troisième branche et celle-ci n'a donc pas besoin d'être testée.

Une deuxième solution pour détecter les erreurs de câblage consiste à comparer le courant maximal obtenu dans chaque branche lors de l'amorçage d'un bras de thyristors T1, T2, T3, après un retard à l'amorçage x déterminé, avec le courant nominal Inom du moteur M. Pour cela, le retard à l'amorçage x choisi doit correspondre à celui pour lequel le courant maximal traversant la branche est égal au courant nominal Inom du moteur M lorsque le câblage est correct. La valeur de ce retard à l'amorçage x se déduit du diagramme représenté en figure 9 sur lequel est tracée la courbe 3 Imax=Inom. En référence à cette figure 9, le retard à l'amorçage x choisi est de 120° pour la première branche contenant le premier bras de thyristors T1, de 240° pour la deuxième branche contenant le deuxième bras de thyristors T2 et de 180° pour la troisième branche contenant le troisième bras de thyristors T3. Le courant nominal Inom du moteur M est un paramètre qui est par exemple initialement saisi par l'utilisateur.

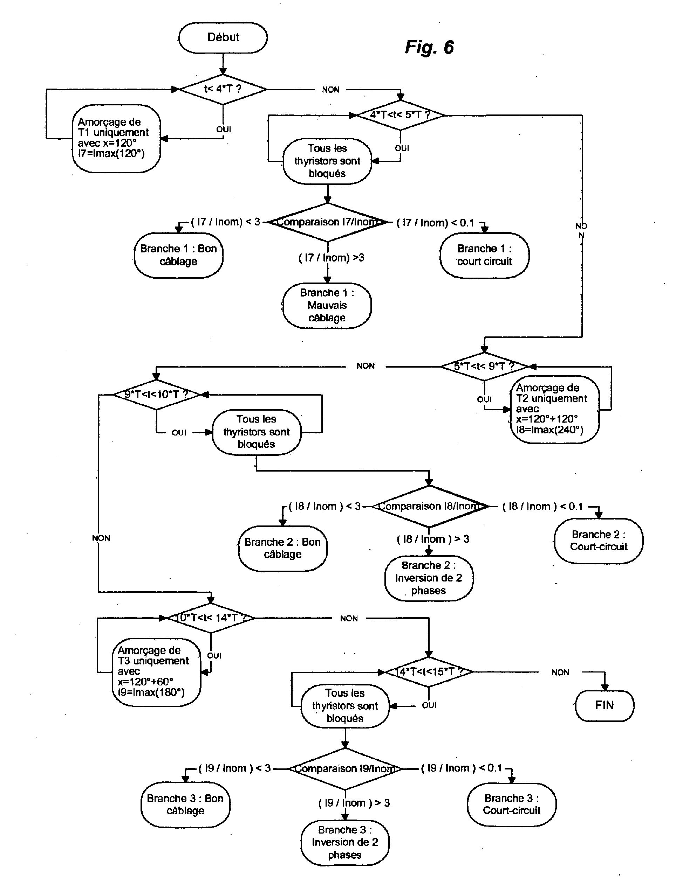

L'algorithme relatif à cette deuxième solution est représenté sur la figure 6. Le processus de détection est le suivant :

- Pendant une certaine durée, par exemple comprise entre zéro et quatre périodes (4T), le premier bras de thyristors T1 est commandé à l'amorçage par les moyens de commande 10 avec un retard à l'amorçage x de 120°.

- A l'aide d'un capteur de courant, on mesure le courant circulant dans la première branche.

- A l'aide d'un détecteur de courant, on extrait et mémorise la valeur maximale du courant mesuré I7=Imax(120°).

- Après les quatre périodes, tous les thyristors sont éventuellement commandés en blocage.

- Les moyens de traitement 11 effectuent ensuite une comparaison entre le courant maximal obtenu I7 lors de l'amorçage et le courant nominal du moteur Inom afin de déterminer si le câblage est correct ou non, selon les principes suivant :

    - si I7 est très supérieur à Inom, par exemple si I7/Inom>3 cela signifie que le câblage de la première branche est mauvais,

    - si I7 est proche de Inom, par exemple si I7/Inom<3 et I7/Inom>0.1, cela signifie que le câblage de la première branche est correct,

    - si I7 est très inférieur à Inom, par exemple si I7/Inom<0,1 cela signifie qu'il n'y a pas de courant et donc que la première branche est en court-circuit.

Le processus ainsi décrit est reproduit pour les deuxième et troisième branches de la configuration en triangle en décalant la valeur du retard à l'amorçage x, respectivement de 120° pour la deuxième branche contenant le bras de thyristors T2 et de 60° pour la troisième branche contenant le bras de thyristors T3. La détermination de la configuration du câblage est ensuite réalisée de manière identique en comparant le courant maximal obtenu I8, I9 lors de chaque amorçage des deux autres branches avec le courant nominal du moteur Inom. Si le câblage de deux branches testées est correct, le câblage de la troisième branche peut également être correct et celle-ci ne doit pas forcément être testée.

Par rapport aux autres méthodes décrites dans cette demande, cette dernière méthode présente l'avantage de générer un appel de courant de Inom si le câblage est déjà dans la bonne configuration, ce qui ne risque pas d'endommager le moteur. Si le câblage est dans la mauvaise configuration (inversion de deux phases), l'appel de courant est de 6*Inom ce qui est tout à fait raisonnable dans le cadre du diagnostic.

Une troisième solution consiste à étudier la variation du retard à l'amorçage x entre un retard à l'amorçage initial x0 de référence pour lequel le courant maximal traversant la branche est théoriquement égal ou proche du courant nominal Inom du moteur M lorsque le câblage est dans une configuration déterminée et un retard à l'amorçage final xf pour lequel le courant maximal traversant la branche est réellement égal au courant nominal Inom du moteur M. Le retard à l'amorçage initial x0 a par exemple une valeur proche de celle pour laquelle le courant maximal obtenu dans la branche est égal au courant nominal Inom du moteur M lorsque le câblage est correct ou en inversion de phases. En liaison avec la figure 9 et comme déjà étudié dans la solution précédente, le retard à l'amorçage initial x0 est donc par exemple proche de la valeur de 120° pour laquelle le câblage de la première branche est correct.

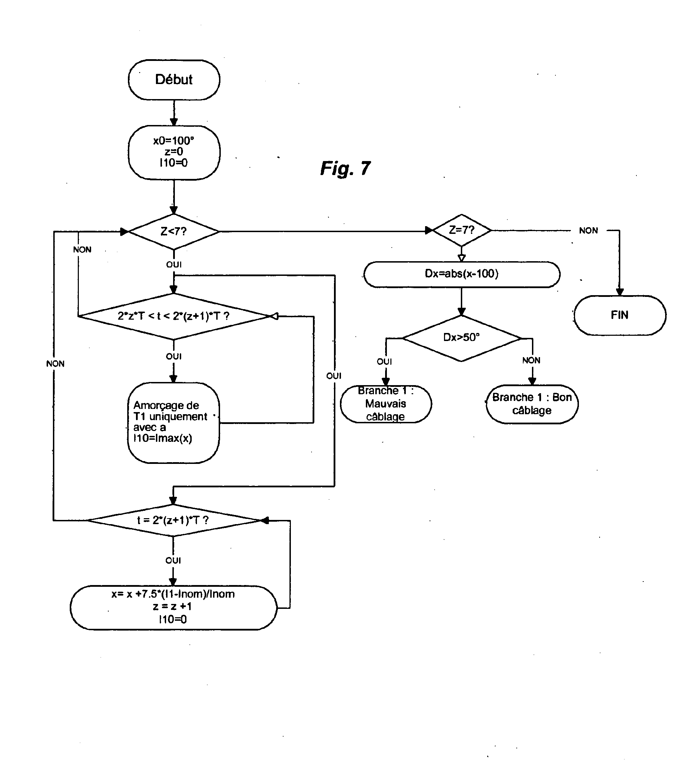

L'algorithme relatif à cette troisième solution est représenté sur la figure 7. Le processus de détection est le suivant :

- Pendant une certaine durée, par exemple égale à deux périodes, le bras de thyristor T1 est commandé à l'amorçage avec le retard à l'amorçage initial x0. Le retard à l'amorçage initial x0 est par exemple de 100°.

- A l'aide d'un capteur de courant et d'un détecteur de courant, le maximum de courant I10 généré dans la première branche lors de l'amorçage est déterminé et mémorisé.

- Lorsque les deux périodes sont terminées, le retard à l'amorçage x est recalculé selon la formule suivante

$$x_{n+1} = x_n + 7{,}5 * \left( \frac{I1 - Inom}{Inom} \right),$$

la valeur de 7,5 étant le pas de régulation. Le courant maximal I10 est également initialisé à zéro.

- La boucle de régulation est par exemple exécutée sept fois.

- Après avoir effectué les sept boucles, on compare le retard à l'amorçage final obtenu xf pour lequel le courant maximal traversant la branche est égal au courant nominal Inom du moteur M et le retard à l'amorçage initial x0.

- En fonction de la différence entre le retard à l'amorçage final xf et le retard à l'amorçage initial x0, les moyens de traitement 11 déterminent si le câblage est bon ou mauvais. Si la différence est importante, par exemple supérieure à 50°, le câblage de la première branche est mauvais. A l'inverse, si la différence est minime, c'est-à-dire inférieure à 50°, c'est que le câblage de la première branche est bon. La valeur de 50° est un exemple et permet d'illustrer qu'il existe une différence perceptible entre le retard à l'amorçage initial x0 et le retard à l'amorçage final xf lorsque le câblage est mauvais.

- L'algorithme est exécuté successivement de la même manière sur les trois branches du triangle afin d'obtenir un diagnostic sur chacune d'elles. Si le câblage de deux branches est correct, le câblage de la troisième branche peut être considéré comme correct.

Par rapport à la première solution décrite ci-dessus, cette dernière solution requiert des appels de courant plus faible ou de même intensité pendant des durées plus courtes. Les appels de courant maximum sont de l'ordre de 7*Inom pendant 0,05 seconde, tandis que pour la première méthode les appels de courant sont de l'ordre de 8*Inom pendant 0,3 seconde. Cette légère différence permet notamment de mieux préserver le moteur.

Toutes les solutions proposées précédemment sont mises en oeuvre en amorçant les bras de thyristors T1, T2, T3 les uns après les autres. Cependant, amorcer les trois bras simultanément est parfaitement envisageable. Il faut toutefois veiller à ne pas faire démarrer le moteur M.

**Revendications**

1. Procédé de commande d'un moteur électrique asynchrone (M) comportant trois enroulements (U, V, W) répartis sur trois branches configurées en triangle, le moteur (M) étant commandé par un démarreur (D) comportant des semi-conducteurs de puissance branchés en série directement dans les trois branches de la configuration en triangle des enroulements du moteur, ledit procédé étant **caractérisé en ce qu'**il comprend les étapes suivantes :

   - application d'une tension dans une première branche du triangle,
   - après un retard à l'amorçage, amorçage du semi-conducteur de la première branche,
   - mesure du courant électrique généré dans la première branche lors de l'amorçage,
   - détermination de la configuration du câblage de la première branche en fonction du courant électrique mesuré.

2. Procédé selon la revendication 1, **caractérisé en ce que** :

   - l'amorçage du semi-conducteur de la première branche est un premier amorçage réalisé après un premier retard à l'amorçage (x1), et **en ce qu'**il comprend en plus :
   - un second amorçage du semi-conducteur de la première branche réalisé après un second retard à l'amorçage (x2) distinct du premier retard à l'amorçage,
   - une mesure du courant électrique généré lors du second amorçage,
   - et **en ce que** la détermination de la configuration du câblage de la première branche est réalisée par comparaison entre une valeur maximale (I1, I3, I5) du courant électrique mesuré lors du premier amorçage et une valeur maximale (I2, I4, I6) du courant électrique mesuré lors du second amorçage.

3. Procédé selon la revendication 1, **caractérisé en ce que** la détermination de la configuration du câblage de la première branche est réalisée par comparaison entre le courant nominal (Inom) du moteur (M) et une valeur maximale du courant électrique (I7, I8, I9) mesuré lors de l'amorçage après un retard à l'amorçage (x) d'une valeur déterminée.

4. Procédé selon la revendication 3, **caractérisé en ce que** la valeur du retard à l'amorçage correspond à celle pour laquelle le courant maximal mesuré dans la première branche lors de l'amorçage est théoriquement égal au courant nominal (Inom) du moteur (M) lorsque la première branche est correctement câblée.

5. Procédé selon la revendication 1, **caractérisé en ce que**

   - l'amorçage du semi-conducteur de la première branche est un premier amorçage réalisé après un retard à l'amorçage initial (x0), et **en ce qu'**il comprend en plus :
   - plusieurs amorçages successifs du semi-conducteur de la première branche en faisant varier à chaque fois le retard à l'amorçage (x) jusqu'à obtenir un retard à l'amorçage final (xf) pour lequel le courant électrique maximal (I10) mesuré est sensiblement égal au courant nominal (Inom), et **en ce que** :
   - la détermination de la configuration du câblage de la première branche est réalisée par comparaison entre le retard à l'amorçage initial (x0) et le retard à l'amorçage final (xf).

6. Procédé selon la revendication 5, **caractérisé en ce que** la valeur du retard à l'amorçage initial (x0) correspond à celle pour laquelle le courant maximal mesuré dans la première branche lors de l'amorçage est théoriquement égal au courant nominal (Inom) du moteur (M) lorsque la première branche est correctement câblée.

7. Procédé selon l'une des revendications 1 à 6, **caractérisé en ce qu'**il est mis en oeuvre successivement sur chacune des trois branches de la configuration en triangle des enroulements (U, V, W) du moteur (M).

8. Système de commande d'un moteur électrique asynchrone (M) comportant trois enroulements (U, V, W) répartis sur trois branches configurées en triangle, le moteur (M) étant commandé par un démarreur (D) comportant des semi-conducteurs de puissance branchés en série directement dans les trois branches de la configuration en triangle des enroulements (U, V, W) du moteur (M), ledit système étant **caractérisé en ce qu'**il comprend :

- des moyens pour appliquer une tension dans une première branche du triangle,
- des moyens de commande (10) pour effectuer un amorçage du semi-conducteur de la première branche après un retard à l'amorçage (x),
- des moyens (12) pour mesurer un courant électrique généré dans la première branche lors de l'amorçage,
- des moyens de traitement (11) pour déterminer la configuration du câblage de la première branche en fonction du courant électrique mesuré.

9. Système selon la revendication 8, **caractérisé en ce que** :

   - l'amorçage du semi-conducteur de la première branche est un premier amorçage réalisé après un premier retard à l'amorçage (x1), et **en ce qu'**il comprend en plus :
   - des moyens de commande (10) pour effectuer un second amorçage du semi-conducteur de la première branche réalisé après un second retard à l'amorçage (x2) distinct du premier retard à l'amorçage (x1),
   - des moyens (12) pour mesurer un courant électrique généré lors du second amorçage,
   - et **en ce que** les moyens de traitement (11) effectuent une comparaison entre une valeur maximale (I1, I3, I5) du courant électrique mesuré lors du premier amorçage et une valeur maximale (I2, I4, I6) du courant électrique mesuré lors du second amorçage pour déterminer la configuration du câblage de la première branche.

10. Système selon la revendication 8, **caractérisé en ce que** les moyens de traitement (11) effectuent une comparaison entre le courant nominal (Inom) du moteur (M) et une valeur maximale (I7, I8, I9) du courant électrique mesuré lors de l'amorçage après un retard à l'amorçage d'une valeur déterminée pour déterminer la configuration du câblage de la première branche.

11. Système selon la revendication 10, **caractérisé en ce que** la valeur du retard à l'amorçage correspond à celle pour laquelle le courant maximal mesuré dans la première branche lors de l'amorçage est théoriquement égal au courant nominal (Inom) du moteur (M) lorsque la première branche est correctement câblée.

12. Système selon la revendication 8, **caractérisé en ce que**

   - l'amorçage du semi-conducteur de la première branche est un premier amorçage réalisé après un retard à l'amorçage initial (x0), et **en ce qu'**il comprend en plus :
   - des moyens de commande (10) pour effectuer plusieurs amorçages successifs du semi-conducteur de la première branche en faisant varier à chaque fois le retard à l'amorçage (x) jusqu'à ce qu'à obtenir un retard à l'amorçage final (xf) pour lequel le courant électrique maximal mesuré (I10) est sensiblement égal au courant nominal, et **en ce que** :
   - les moyens de traitement (11) effectuent une comparaison entre le retard à l'amorçage initial (x0) et le retard à l'amorçage final (xf) pour déterminer la configuration du câblage de la première branche.

13. Système selon la revendication 12, **caractérisé en ce que** la valeur du retard à l'amorçage initial (x0) correspond à celle pour laquelle le courant maximal mesuré dans la première branche lors de l'amorçage est théoriquement égal au courant nominal (Inom) du moteur (M) lorsque la première branche est correctement câblée.

**Claims**

1. Method for controlling an asynchronous electric motor (M) comprising three windings (U, V, W) distributed over three branches in delta configuration, the motor (M) being controlled by a starter (D) comprising power semiconductors directly connected in series within the three branches of the delta configuration of the windings of the motor, the said method being **characterized in that** it comprises the following steps:

   - application of a voltage in a first branch of the delta,
   - after a priming delay, priming of the semiconductor of the first branch,
   - measurement of the electrical current generated within the first branch during the priming operation,
   - determination of the configuration of the cabling of the first branch as a function of the measured electrical current.

2. Method according to Claim 1, **characterized in that**:

   - the priming of the semiconductor of the first branch is a first priming operation effected after a first priming delay (x1), and **in that** it additionally comprises:
   - a second priming of the semiconductor of the first branch effected after a second priming delay (x2) separate from the first priming delay,
   - a measurement of the electrical current generated during the second priming operation,

- and **in that** the determination of the configuration of the cabling of the first branch is carried out by comparison between a maximum value (I1, I3, I5) of the electrical current measured during the first priming operation and a maximum value (I2, I4, I6) of the electrical current measured during the second priming operation.

3.  Method according to Claim 1, **characterized in that** the determination of the configuration of the cabling of the first branch is effected by comparison between the nominal current (Inom) of the motor (M) and a maximum value of the electrical current (I7, I8, I9) measured during the priming operation after a priming delay (x) of a given value.

4.  Method according to Claim 3, **characterized in that** the value of the priming delay corresponds to that for which the maximum current measured in the first branch during the priming operation is theoretically equal to the nominal current (Inom) of the motor (M) when the first branch is correctly cabled.

5.  Method according to Claim 1, **characterized in that**

    - the priming of the semiconductor of the first branch is a first priming operation effected after an initial priming delay (x0), and **in that** it additionally comprises:
    - several successive priming operations on the semiconductor of the first branch making the priming delay (x) vary each time until a final priming delay (xf) is obtained for which the maximum electrical current (I10) measured is substantially equal to the nominal current (Inom), and **in that**:
    - the determination of the configuration of the cabling of the first branch is carried out by comparison between the initial priming delay (x0) and the final priming delay (xf).

6.  Method according to Claim 5, **characterized in that** the value of the initial priming delay (x0) corresponds to that for which the maximum current measured in the first branch during the priming operation is theoretically equal to the nominal current (Inom) of the motor (M) when the first branch is correctly cabled.

7.  Method according to one of Claims 1 to 6, **characterized in that** it is implemented successively on each of the three branches of the delta configuration of the windings (U, V, W) of the motor (M).

8.  System for controlling an asynchronous electric motor (M) comprising three windings (U, V, W) distributed over three branches in delta configuration, the motor (M) being controlled by a starter (D) comprising power semiconductors directly connected in series within the three branches of the delta configuration of the windings (U, V, W) of the motor (M), the said system being **characterized in that** it comprises:

    - means for applying a voltage in a first branch of the delta,
    - control means (10) for performing a priming of the semiconductor of the first branch after a priming delay (x),
    - means (12) for measuring an electrical current generated in the first branch during the priming operation,
    - processing means (11) for determining the configuration of the cabling of the first branch as a function of the measured current.

9.  System according to Claim 8, **characterized in that**:

    - the priming of the semiconductor of the first branch is a first priming operation carried out after a first priming delay (x1), and **in that** it additionally comprises:
    - control means (10) for performing a second priming of the semiconductor of the first branch carried out after a second priming delay (x2) different from the first priming delay (x1),
    - means (12) for measuring an electrical current generated during the second priming operation,
    - and **in that** the processing means (11) carry out a comparison between a maximum value (I1, I3, I5) of the electrical current measured during the first priming operation and a maximum value (I2, I4, I6) of the electrical current measured during the second priming operation in order to determine the configuration of the cabling of the first branch.

10. System according to Claim 8, **characterized in that** the processing means (11) carry out a comparison between the nominal current (Inom) of the motor (M) and a maximum value (I7, I8, I9) of the electrical current measured during the priming operation after a priming delay of a given value in order to determine the configuration of the cabling of the first branch.

11. System according to Claim 10, **characterized in that** the value of the priming delay corresponds to that for which the measured maximum current in the first branch during the priming operation is theoretically equal to the nominal current (Inom) of the motor (M) when the first branch is correctly cabled.

12. System according to Claim 8, **characterized in that**

    - the priming of the semiconductor of the first branch is a first priming operation carried out after an initial priming delay (x0), and **in that** it additionally comprises:

- control means (10) for performing several successive primings of the semiconductor of the first branch making the priming delay (x) vary each time until a final timing delay (xf) is obtained for which the measured maximum electrical current (I10) is substantially equal to the nominal current, and **in that**:

- the processing means (11) carry out a comparison between the initial priming delay (x0) and the final priming delay (xf) in order to determine the configuration of the cabling of the first branch.

**13.** System according to Claim 12, **characterized in that** the value of the initial priming delay (x0) corresponds to that for which the measured maximum current in the first branch during the priming operation is theoretically equal to the nominal current (Inom) of the motor (M) when the first branch is correctly cabled.

**Patentansprüche**

**1.** Verfahren zur Steuerung eines elektrischen Asynchronmotors (M) mit drei Wicklungen (U, V, W), die auf drei Zweige in Dreieck-Konfiguration verteilt sind, wobei der Motor (M) von einem Anlasser (D) gesteuert wird, der Leistungshalbleiter aufweist, die direkt mit den drei Zweigen der Dreieck-Konfiguration der Wicklungen des Motors in Reihe geschaltet sind, wobei das Verfahren **dadurch gekennzeichnet ist, dass** es die folgenden Schritte enthält:

- Anlegen einer Spannung in einem ersten Zweig des Dreiecks,
- nach einer Zündverzögerung, Zündung des Halbleiters des ersten Zweigs,
- Messen des im ersten Zweig bei der Zündung erzeugten elektrischen Stroms,
- Bestimmung der Konfiguration der Verdrahtung des ersten Zweigs in Abhängigkeit vom gemessenen elektrischen Strom.

**2.** Verfahren nach Anspruch 1, **dadurch gekennzeichnet, dass:**

- die Zündung des Halbleiters des ersten Zweigs eine erste Zündung ist, die nach einer ersten Zündverzögerung (x1) durchgeführt wird, und dass es außerdem enthält:
- eine zweite Zündung des Halbleiters des ersten Zweigs, die nach einer zweiten Zündverzögerung (x2) durchgeführt wird, die sich von der ersten Zündverzögerung unterscheidet,
- eine Messung des bei der zweiten Zündung erzeugten elektrischen Stroms,
- und dass die Bestimmung der Konfiguration der Verdrahtung des ersten Zweigs durch Vergleich zwischen einem Maximalwert (I1, I3, I5) des bei der ersten Zündung gemessenen Stroms und einem Maximalwert (I2, I4, I6) des bei der zweiten Zündung gemessenen Stroms durchgeführt wird.

**3.** Verfahren nach Anspruch 1, **dadurch gekennzeichnet, dass** die Bestimmung der Konfiguration der Verdrahtung des ersten Zweigs durch Vergleich zwischen dem Nennstrom (Inom) des Motors (M) und einem Maximalwert des elektrischen Stroms (I7, I8, I9) durchgeführt wird, der bei der Zündung nach einer Zündverzögerung (x) um einen bestimmten Wert gemessen wird.

**4.** Verfahren nach Anspruch 3, **dadurch gekennzeichnet, dass** der Wert der Zündverzögerung demjenigen entspricht, bei dem der im ersten Zweig bei der Zündung gemessene maximale Strom theoretisch gleich dem Nennstrom (Inom) des Motors (M) ist, wenn der erste Zweig korrekt verdrahtet ist.

**5.** Verfahren nach Anspruch 1, **dadurch gekennzeichnet, dass**

- die Zündung des Halbleiters des ersten Zweigs eine erste Zündung ist, die nach einer Anfangszündverzögerung (x0) durchgeführt wird, und dass es außerdem enthält:
- mehrere aufeinanderfolgende Zündungen des Halbleiters des ersten Zweigs, indem jedes Mal die Zündverzögerung (x) verändert wird, bis eine Endzündverzögerung (xf) erhalten wird, bei der der gemessene maximale elektrische Strom (I10) im Wesentlichen gleich dem Nennstrom (Inom) ist, und dass:
- die Bestimmung der Konfiguration der Verdrahtung des ersten Zweigs durch Vergleich zwischen der Anfangszündverzögerung (x0) und der Endzündverzögerung (xf) durchgeführt wird.

**6.** Verfahren nach Anspruch 5, **dadurch gekennzeichnet, dass** der Wert der Anfangszündverzögerung (x0) demjenigen entspricht, bei dem der im ersten Zweig bei der Zündung gemessene maximale Strom theoretisch gleich dem Nennstrom (Inom) des Motors (M) ist, wenn der erste Zweig korrekt verdrahtet ist.

**7.** Verfahren nach einem der Ansprüche 1 bis 6, **dadurch gekennzeichnet, dass** es nacheinander an jeden der drei Zweige der Dreieck-Konfiguration der Wicklungen (U, V, W) des Motors (M) angewendet wird.

**8.** System zur Steuerung eines elektrischen Asynchronmotors (M) mit drei Wicklungen (U, V, W), die auf drei Zweige in Dreieck-Konfiguration verteilt sind, wobei der Motor (M) von einem Anlasser (D) gesteuert wird, der Leistungshalbleiter aufweist, die direkt mit den drei Zweigen der Dreieck-Konfiguration der Wicklungen (U, V, W) des Motors (M) in Reihe geschaltet sind, wobei das System **dadurch gekennzeichnet ist, dass** es enthält:

- Einrichtungen, um eine Spannung in einem ersten Zweig des Dreiecks anzulegen,
- Steuereinrichtungen (10), um eine Zündung des Halbleiters des ersten Zweigs nach einer Zündverzögerung (x) durchzuführen,
- Einrichtungen (12), um einen elektrischen Strom zu messen, der im ersten Zweig bei der Zündung erzeugt wird,
- Verarbeitungseinrichtungen (11), um die Konfiguration der Verdrahtung des ersten Zweigs in Abhängigkeit vom gemessenen elektrischen Strom zu bestimmen.

9. System nach Anspruch 8, **dadurch gekennzeichnet, dass:**

- die Zündung des Halbleiters des ersten Zweigs eine erste Zündung ist, die nach einer ersten Zündverzögerung (x1) durchgeführt wird, und dass es außerdem enthält:
- Steuereinrichtungen (10), um eine zweite Zündung des Halbleiters des ersten Zweigs durchzuführen, die nach einer zweiten Zündverzögerung (x2) durchgeführt wird, die sich von der ersten Zündverzögerung (x1) unterscheidet,
- Einrichtungen (12), um einen elektrischen Strom zu messen, der bei der zweiten Zündung erzeugt wird,
- und dass die Verarbeitungseinrichtungen (11) einen Vergleich zwischen einem Maximalwert (I1, I3, I5) des bei der ersten Zündung gemessenen elektrischen Stroms und einem Maximalwert (I2, I4, I6) des bei der zweiten Zündung gemessenen elektrischen Stroms durchführen, um die Konfiguration der Verdrahtung des ersten Zweigs zu bestimmen.

10. System nach Anspruch 8, **dadurch gekennzeichnet, dass** die Verarbeitungseinrichtungen (11) einen Vergleich zwischen dem Nennstrom (Inom) des Motors (M) und einem Maximalwert (I7, I8, I9) des bei der Zündung nach einer Zündverzögerung um einen bestimmten Wert gemessenen elektrischen Stroms durchführen, um die Konfiguration der Verdrahtung des ersten Zweigs zu bestimmen.

11. System nach Anspruch 10, **dadurch gekennzeichnet, dass** der Wert der Zündverzögerung demjenigen entspricht, bei dem der im ersten Zweig bei der Zündung gemessene maximale Strom theoretisch gleich dem Nennstrom (Inom) des Motors (M) ist, wenn der erste Zweig korrekt verdrahtet ist.

12. System nach Anspruch 8, **dadurch gekennzeichnet, dass**

- die Zündung des Halbleiters des ersten Zweigs eine erste Zündung ist, die nach einer Anfangszündverzögerung (x0) durchgeführt wird, und dass es außerdem enthält:
- Steuereinrichtungen (10), um mehrere aufeinanderfolgende Zündungen des Halbleiters des ersten Zweigs durchzuführen, indem jedes Mal die Zündverzögerung (x) verändert wird, bis eine Endzündverzögerung (xf) erhalten wird, bei der der gemessene maximale elektrische Strom (I10) im Wesentlichen gleich dem Nennstrom ist, und dass:
- die Verarbeitungseinrichtungen (11) einen Vergleich zwischen der Anfangszündverzögerung (x0) und der Endzündverzögerung (xf) durchführen, um die Konfiguration der Verdrahtung des ersten Zweigs zu bestimmen.

13. System nach Anspruch 12, **dadurch gekennzeichnet, dass** der Wert der Anfangszündverzögerung (x0) demjenigen entspricht, bei dem der im ersten Zweig bei der Zündung gemessene maximale Strom theoretisch gleich dem Nennstrom (Inom) des Motors (M) ist, wenn der erste Zweig korrekt verdrahtet ist.

**Fig. 1**

**Fig. 2**

*Fig. 3*

*Fig. 8*

*Fig. 9*

**Fig. 4A**

**Fig. 4B**

**Fig. 4C**

**Fig. 4D**

**Fig. 4E**

*Fig. 5*

Début

t<2T — NON →

Amorçage de T1 uniquement avec x1=14° I1=Imax(14°)

OUI

2T<t<4T — NON →

Amorçage de T1 uniquement avec x2=50° I2=Imax(50°)

OUI

4T<t<5T

Tous les thyristors sont bloqués

OUI

NON

I1>I2 ← Comparaison I1/I2 → I1<I2

Branche 1 : Bon câblage

I1=I2

Branche 1 : Inversion de 2 phases

Branche 1 : Court-circuit

5T<t<7T

NON ←

OUI

Amorçage de T2 uniquement avec x1=14°+120° I3=Imax(134°)

7T<t<9T

NON ←

OUI

Amorçage de T2 uniquement avec x2=50°+120° I4=Imax(170°)

9T<t<10T

OUI →

Tous les thyristors sont bloqués

NON

I3>I4 ← Comparaison I3/I4 → I3<I4

Branche 2 : Bon câblage

I3=I4

Branche 2 : Inversion de 2 phases

Branche 2 : Court-circuit

10T<t<12T — NON →

Amorçage de T3 uniquement avec x1=14°+60° I5=Imax(74°)

OUI

12T<t<14T — NON →

Amorçage de T3 uniquement avec x2=50°+60° I6=Imax(110°)

OUI

14T<t<16T — NON →

FIN

Tous les thyristors sont bloqués

OUI

I5>I6 ← Comparaison I5/I6 → I5>I6

Branche 3 : Bon câblage

I5>I6

Branche 3 : Inversion de 2 phases

Branche 3 : Court-circuit

**Fig. 6**

Début

t< 4*T ?
NON
OUI

Amorçage de T1 uniquement avec x=120° I7=Imax(120°)

4*T<t< 5*T ?
OUI
NON

Tous les thyristors sont bloqués

( I7 / Inom) < 3
Comparaison I7/Inom
( I7 / Inom) < 0.1

Branche 1 : Bon câblage

( I7 / Inom) >3

Branche 1 : court circuit

Branche 1 : Mauvais câblage

NON
5*T<t< 9*T ?
OUI

Amorçage de T2 uniquement avec x=120°+120° I8=Imax(240°)

9*T<t<10*T ?
OUI

Tous les thyristors sont bloqués

( I8 / Inom ) < 3
Comparaison I8/Inom
( I8 / Inom ) < 0.1

Branche 2 : Bon câblage

( I8 / Inom ) > 3

Branche 2 : Court-circuit

Branche 2 : Inversion de 2 phases

NON

10*T<t< 14*T ?
NON
OUI

Amorçage de T3 uniquement avec x=120°+60° I9=Imax(180°)

14*T<t<15*T ?
OUI
NON

Tous les thyristors sont bloqués

FIN

( I9 / Inom ) < 3
Comparaison I9/Inom
( I9 / Inom ) < 0.1

Branche 3 : Bon câblage

( I9 / Inom ) > 3

Branche 3 : Court-circuit

Branche 3 : Inversion de 2 phases

**Fig. 7**

```
              ┌─────────┐
              │  Début  │
              └────┬────┘
                   │
              ┌────▼────┐
              │ x0=100° │
              │  z=0    │
              │  I10=0  │
              └────┬────┘
                   │
        ┌─────────◄▼───────┐          ┌────────┐
        │      Z<7?        ├─────────►│  Z=7?  ├───── NON ──┐
        └──────────────────┘   NON    └───┬────┘            │
  NON          │OUI                       │                 │
   │           │                   ┌──────▼──────┐    ┌─────▼────┐
   │    ┌──────▼──────┐            │ Dx=abs(x-100)│    │   FIN    │
   │    │ 2*z*T < t <  │◄─ OUI     └──────┬──────┘    └──────────┘
   │    │ 2*(z+1)*T ?  │                  │
   │    └──────┬──────┘            ┌──────▼──────┐
   │           │OUI                │   Dx>50°    │
   │    ┌──────▼──────┐            └──┬───────┬──┘
   │    │ Amorçage de │          OUI │       │ NON
   │    │ T1 uniquement│       ┌──────▼──┐ ┌──▼──────┐
   │    │ avec a       │       │Branche 1:│ │Branche 1:│
   │    │ I10=Imax(x)  │       │ Mauvais  │ │  Bon     │
   │    └─────────────┘        │ câblage  │ │ câblage  │
   │           │               └──────────┘ └──────────┘
   │    ┌──────▼──────┐
   └───►│ t = 2*(z+1)*T ?│◄──┐
 NON    └──────┬──────┘     │
               │OUI         │
        ┌──────▼──────────┐ │
        │x= x +7.5*(I1-Inom)/Inom│
        │ z = z +1        │─┘
        │ I10=0           │
        └─────────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6038114 A
- US 6426603 B

- US 6304053 B